# EUROPÄISCHE PATENTSCHRIFT

(11) **EP 1 667 871 B1**
(45) Veröffentlichungstag und Bekanntmachung des Hinweises auf die Patenterteilung: **05.03.2008**
(21) Anmeldenummer: 04765556.8
(22) Anmeldetag: 23.09.2004
(51) Int. Cl.: B60N 2/56

(54) **SITZ MIT EINER AN EINER AUFLAGE BEFESTIGTEN VERKABELUNG, VERFAHREN ZUR MONTAGE EINES SITZES UND VERWENDUNG EINES FLACHLEITERS ZUR BILDUNG EINER VERKABELUNG EINES SITZES**
SEAT COMPRISING WIRING FIXED TO A SUPPORT, METHOD FOR ASSEMBLING A SEAT, AND USE OF A FLAT CONDUCTOR FOR THE WIRING OF A SEAT
SIEGE POURVU D'UN CABLAGE FIXE A UN SUPPORT, PROCEDE DE MONTAGE D'UN SIEGE ET UTILISATION D'UN CABLE PLAT POUR FORMER UN CABLAGE DE SIEGE

(30) Priorität: 23.09.2003 DE 10344296
(43) Veröffentlichungstag der Anmeldung: 14.06.2006
(73) Patentinhaber: Johnson Controls GmbH, 51399 Burscheid (DE)
(72) Erfinder: SCHWEIKER, Thomas, 71083 Herrenberg Kayh (DE)
(74) Vertreter: Wolff, Felix
(86) Internationale Anmeldenummer: PCT/EP2004/010703
(87) Internationale Veröffentlichungsnummer: WO 2005/030524

(56) Entgegenhaltungen:
- EP-A- 1 049 355
- EP-A- 1 217 920
- WO-A-94/09684
- WO-A-95/05766
- DE-A1- 3 513 909
- DE-A1- 4 014 178
- DE-A1- 4 017 707
- DE-A1- 4 101 290
- DE-A1- 10 058 190
- DE-A1- 10 313 165
- DE-A1- 19 909 336
- DE-A1- 19 930 014
- DE-C1- 3 425 798
- DE-C1- 19 943 890
- DE-U1- 20 314 527
- US-A- 4 628 188
- US-A- 5 835 983
- US-A1- 2004 036 325
- US-B1- 6 710 303
- US-B1- 6 792 671

## Beschreibung

Die vorliegende Erfindung betrifft einen Sitz, insbesondere für ein Fahrzeug, dessen Verkabelung flach und einfach montierbar ist und in und/oder an einer Auflage angebracht ist. Die Erfindung betrifft weiterhin ein Verfahren zur Montage eines Sitzes sowie die Verwendung eines Flachleiters zur Bildung einer Verkabelung eines Sitzes.

Es sind Fahrzeuge bekannt, in denen zur Verkabelung Flachleiter im Dachhimmel oder an Türverkleidungen verwendet werden. Aus der Druckschrift DE 199 30 014 ist bekannt, Leiterbahnen direkt auf ein bereits vorhandenes Bauteil des Kraftfahrzeugs aufzubringen, um die Unterbringung von Kabelbäumen in einem Dachhimmel oder unter Teppichen zu erleichtern.

Die Sitze von Fahrzeugen werden immer aufwendiger ausgestattet, beispielsweise mit Motoren zur automatischen Sitzeinstellung, Sitzheizungen oder Sensoren. Da diese Sitzbestandteile i. d. R. elektrisch anzuschließen sind, ist die Verkabelung solcher Fahrzeugsitze aufwendig. Bisher werden Rundleiter verwendet, die mittels Befestigungselemente an der Stützstruktur des Sitzes befestigt sind. Dafür wird die Stützstruktur mit Löchern versehen, was in der Fertigung aufwendig ist und die Stabilität der Stützstruktur mindert.

Die Bestandteile der Fahrzeugsitze müssen einer Dauerbelastung durch das Gewicht der Insassen, durch die Bewegungen der Insassen und durch die dynamischen Belastungen bei der Fahrzeugbewegung standhalten und dürfen den Sitzkomfort für die Insassen nicht negativ beeinflussen.

Weiterhin sollte der Platz in Fahrzeugen optimal ausgenutzt werden und das Gewicht und die Kosten minimiert werden.

Die Druckschrift DE 199 43 890 C1, die alle Merkmale des Oberbegriffs des Anspruchs 1 zeigt, beschreibt ein Sitzteil eines Kraftfahrzeugsitzes, beschreibt ein Sitzteil eines Kraftfahrzeugsitzes, auf dessen Unterfederkonstruktion eine Kunststoffplatte aufgeclipst ist, in die mindestens eine Steckdose für den Anschluss von für Sitzfunktionen erforderliche Sitzbaugruppen und mindestens eine Steckdose für den Anschluss an das Bordnetz des Fahrzeugs integriert sind, wobei die Steckdosen durch in die Kunststoffplatte eingegossene Leiter miteinander verbunden sind. Die Kunststoffplatte muss in Abhängigkeit von den anzuschließenden Komponenten sowie der Form des Sitzes der Modellreihe angepasst werden. Sie erfordert eine separate und ggf. aufwendige Fertigung und nimmt viel Bauraum ein.

Die Aufgabe der vorliegenden Erfindung ist, eine kostengünstige, einfach zu fertigende und einfach montierbare Verkabelung für Sitze, insbesondere für ein Fahrzeug, bereitzustellen, die platzsparend und strapazierfähig ist, den Sitzkomfort nicht negativ beeinflusst und deren Gewicht minimiert ist.

Gelöst wird die Aufgabe durch einen Sitz, insbesondere für ein Fahrzeug, wobei der Sitz eine Stützstruktur, eine Auflage und eine Verkabelung, ausgenommen Sitzheizungen, aufweist, wobei die Verkabelung an der Auflage befestigt ist.

Durch die erfindungsgemäße Befestigung der Verkabelung an der Auflage des Sitzes besteht in der Montage kein Bedarf, die Verkabelung durch Befestigungselemente an der Stützstruktur zu befestigen. Der Arbeitsaufwand und der Bedarf an Befestigungselementen entfällt, was sich günstig auf die Montagekosten auswirkt, und die Stabilität der Stützstruktur bleibt erhalten, weil keine Bohrungen oder Löcher zur Befestigung der Verkabelung in die Stützstruktur eingebracht werden müssen.

Die Auflage ist im wesentlichen elastisch und/oder plastisch ausgebildet. Sie passt sich im wesentlichen der von den strukturbildenden Komponenten des Sitzes vorgegebenen Form an. Die Auflage umfasst zumindest alle komfortbietenden Komponenten des Sitzes, im Gegensatz zu den strukturbildenden Komponenten des Sitzes. Mit Auflage wird erfindungsgemäß insbesondere eine Polsterauflage bzw. ein Polster des Sitzes bezeichnet. Der Fachmann versteht, dass der Sitz außer der komfortbietenden Auflage eine oder mehrere weitere Auflagen aufweisen kann, die sich bevorzugt flächig und daher im wesentlichen zweidimensional erstrecken und mittels denen beispielsweise und bevorzugt die Verkabelung im Sitz angeordnet werden kann. Der Fachmann versteht weiterhin, dass die eine oder mehrere weitere Auflage nicht zwingend an der komfortbietenden Auflage anliegt.

Die Auflage ist bevorzugt zumindest teilweise mehrschichtig, wobei die Verkabelung besonders bevorzugt an einer der Schichten befestigt ist. Dadurch ist die Fertigung der Auflage in mehreren Schritten möglich, wobei die Schicht, an der die Verkabelung befestigt ist, vorgefertigt werden kann, bevor sie mit der bzw. den weiteren Schichten der Auflage zusammengefügt wird.

Der Fachmann versteht, dass die Verkabelung auch die elektrische Versorgung (Stromzuleitung) einer Sitzheizung für den Fahrzeugsitz umfassen kann, jedoch nicht die Sitzheizungen selbst beinhaltet.

In einer bevorzugten Ausführungsform sind die Schichten aus verschiedenem Material gebildet. Dadurch kann die Auflage an die Anforderungen des Sitzes sehr flexibel angepasst werden, beispielsweise an Hitzebeständigkeit, Belüftung, Feuchtigkeitsabweisung, Feuchtigkeitsbeständigkeit oder Druckverteilung. Sie besteht insbesondere aus Schaumstoffen, Gummihaar oder dergleichen, kann aber auch weitere Schichten, beispielsweise Filz- oder Vliesmatten, oder mit Wollwatte oder Vlies gefüllte Schichten, aufweisen. Besonders bevorzugt werden recyclebare Materialien verwendet.

Vorzugsweise weist der Sitz mehrere Auflagen auf, wobei die Verkabelung an zumindest einer der Auflagen befestigt ist. Die Anordnung der Verkabelung an einer oder mehrerer der Auflagen ermöglicht in Abhängigkeit von der Position der anzuschließenden Verbraucher die Verwendung kurzer Leitungen, so dass die Verkabelung kostengünstig ist. Die Anordnung der Verkabelung an jeder der Auflagen kann vor der Montage des Sitzes vorgefertigt werden, so dass die Auflage während der Montage des Sitzes besonders einfach montierbar ist. Beispielsweise kann die Auflage, die die Verkabelung aufweist, an sich im wesentlichen flächig erstreckende strukturbildende Komponenten angeordnet oder sogar nur eingelegt werden. Die Montage des Sitzes ist daher sehr schnell durchführbar und sehr kostengünstig.

In einer ganz besonders bevorzugten Ausführungsform ist die Verkabelung an einer Filzmatte befestigt. Dadurch wird die Verkabelung auf einer im wesentlichen ebenen Fläche befestigt, was einfach und schnell durchführbar ist, insbesondere bei vorgefalteter Verkabelung. Eine vorgefaltete Verkabelung nimmt bzgl. der Lagerhaltung wenig Raum ein. Filzmatten sind dauerbeständig und kostengünstig. Der Fachmann versteht, dass anstelle von Filzmatten auch Matten aus anderen Materialien verwendbar sind, die im wesentlichen flächig, d. h. im wesentlichen zweidimensional ausgebildet sind.

In einer besonders bevorzugten Ausführungsform bildet die Filzmatte eine der mehreren Auflagen. Besonders bevorzugt ist die Auflage an einer sich im wesentlichen flächig erstreckenden strukturbildenden Komponente des Sitzes, beispielsweise der Kissenschale angeordnet. In dieser Ausführungsform wird die komfortbietende Auflage, die das Polster bildet und ggf. zumindest teilweise weitere Funktionen beinhaltet, beispielsweise einen Sitzairbag, daher nicht durch Anordnung der Verkabelung verändert. Die Anordnung einer erfindungsgemäßen Auflage, beispielsweise einer Filzmatte, an der Fläche der Kissenschale, die der komfortbietenden Auflage gegenüberliegt, hat den Vorteil, dass der Sitzkomfort für den Benutzer gar nicht durch die Verkabelung beeinflusst werden kann und daher das Material der Verkabelung weniger komfortabel, beispielsweise weniger biegsam, ausgeführt werden kann, als bei Anordnung der Verkabelung in oder an der komfortbietenden Auflage. Es können daher herkömmliche Verkabelungen, insbesondere Flachleiter, verwendet werden.

Vorteilhaft ist ebenfalls eine Ausführungsform, bei der der Sitz außer der komfortbietenden Auflage eine weitere, die Verkabelung aufweisende Auflage aufweist, die beispielsweise aus einem Schaumstoff anstelle einer Filzmatte gebildet ist, wobei die Stützstruktur des Sitzes im wesentlichen rahmenförmig, beispielsweise gitterförmig, vorgesehen ist.

Die Verkabelung umfasst bevorzugt Flachleiter, wobei die Verkabelung insbesondere FFC (folienisolierte Kupferbahnen, Flexible Flat Cable), FFCe (Flexible Flat Cable extruded) und/oder FPC (gedruckte Folienschaltungen, Flexible Printed Circuit) ist. Der Unterschied zwischen FFC-Material und FFCe-Material ist, dass FFCe-Material im Gegensatz zu FFC-Material nicht laminiert ist, sondern extrudiert ist.

Der Fachmann erkennt, dass auch andere Flachleiter geeignet sind, die eine Dicke aufweisen, die möglichst gering ist, vorteilhaft in der Größenordnung um 1 mm oder darunter.

Vorteilhafterweise können Flachleiter eine Vielzahl von Leiter aufweisen. Dadurch können mehrere Verbraucher, sowie ggf. aufwendig anzuschließende Verbraucher an die Verkabelung angeschlossen werden. Der Fachmann erkennt, dass sämtliche elektrischen Leiter geeignet sind.

Durch Verwendung der Flachleiter ist es ggf. möglich, das Gewicht der Verkabelung im Vergleich zur Verkabelung mit Rundleitern zu verringern, beispielsweise ggf. deshalb, weil die Flachleiter auf direkterem Weg zwischen den anzuschließenden Verbrauchern/Anschlussstellen geführt werden können als die Rundleiter, die im wesentlichen entlang der Stützstruktur des Sitzes geführt werden müssen.

Außerdem sind FFC- und FPC- Verkabelungen vergleichsweise einfach recyclebar.

Die Verkabelung ist durch ihre geringe Dicke nahezu zweidimensional und eignet sich daher in besonderer Weise für eine zweidimensionale Verlegung. Die Verkabelung lässt sich daher sehr einfach auf Flächen, die im wesentlichen eben angeordnet werden können bzw. angeordnet sind, aufbringen.

Bei Verwendung von Flachleitern wird aufgrund ihrer minimalen Dicke wenig Bauraum benötigt.

Insbesondere im Bereich der Sitzfläche und im Bereich der Lehnenfläche, d. h. den jeweiligen Hauptflächen, die mit einem Insassen des Fahrzeugs in Berührung stehen, ist die Verbindungsfläche zwischen den strukturbildenden Komponenten des Sitzes und der Auflage im wesentlichen flächig, d. h. im wesentlichen zweidimensional ausgebildet. In diesem Bereich ist die erfindungsgemäße Anwendung einer mit Flachleitern vorgesehenen Verkabelung des Sitzes besonders bevorzugt.

Die Verkabelung kann daher in einer bevorzugten Ausführungsform der Erfindung in der Auflage vorgesehen, d. h. integriert oder zumindest teilweise integriert in die Schichtstruktur der Auflage, sein. Dadurch werden Befestigungselemente, insbesondere an der Stützstruktur eingespart, so dass keine Löcher für die Befestigungselemente in der Stützstruktur vorgesehen sein müssen, die Stabilität der Stützstruktur nicht gemindert ist und die Fertigung daher weniger aufwendig und kostengünstiger ist.

Vorzugsweise weist die Auflage eine Sichtseite und eine Rückseite auf, und die Verkabelung ist an der Rückseite vorgesehen. Dadurch ist die Verkabelung nicht sichtbar, und das Erscheinungsbild des Sitzes bleibt erhalten. Weiterhin wird dadurch die Verkabelung möglichst weit vom Insassen des Fahrzeugs weg angeordnet, so dass einerseits Komforteinbußen reduziert und andererseits vom Insassen ausgeübte Kräfte und/oder sonstige Einwirkungen, wie beispielsweise Feuchtigkeit, Temperatur oder dergleichen, von der Verkabelung weitgehend ferngehalten werden. Hierbei ist die Verkabelung erfindungsgemäß insbesondere auf der Rückseite der Auflage vorgesehen. Die Vorderseite oder die Sichtseite der Auflage weist bevorzugt eine Dekorschicht auf.

Aufgrund der vergleichsweise geringen Dicke der Verkabelung und der Elastizität und/oder Plastizität der Auflage wird durch das Anbringen der Verkabelung in der Auflage und/oder an der Auflage der Sitzkomfort nicht negativ beeinflusst bzw. bei vergleichbarem Volumen/Gewicht des Sitzes kann dieser komfortabler sein, weil mehr Platz/Gewicht zur Polsterung möglich ist.

Außerdem kann die Auflage und/oder Schichten der Auflage Vertiefungen aufweisen, in die die Verkabelung eingelegt wird oder die Verkabelung kann in Schichten bevorzugt gleichen Materials eingebettet sein.

Besonders bevorzugt bildet die Filzmatte die Rückseite der Auflage. Die Verkabelung ist durch die Filzmatte daher, insbesondere bei Auflegen auf eine Federmatte und/oder weitere strukturbildende Komponenten des Sitzes, geschützt.

Die Befestigung der Verkabelung erfolgt bevorzugt durch Kleben und/oder mittels Klettbändern und/oder weiteren Mitteln zur Befestigung. Der Fachmann versteht, dass alle weiteren Mittel zur Befestigung geeignet sind, die auch bei dauerhafter Beanspruchung der Verkabelung, beispielsweise durch die Bewegungen des Insassen, Wärme oder Feuchtigkeit, eine sichere Verbindung gewährleistet, ohne das die Verkabelung sich löst.

Beispielsweise kann die Auflage auf der Seite, auf der die Verkabelung befestigt wird, d. h. auf der Rückseite, aus einem Schlaufengeflecht bestehen oderein Schlaufengeflecht kann leicht auf die Auflage aufgenäht und/oder aufgeklebt sein, so dass die Verkabelung beispielsweise mit Klettverschlüssen leicht auf dem bzw. mittels des Schlaufengeflecht(s) befestigt werden kann. Weiterhin kann die Verkabelung auch direkt auf die Auflage aufgeklebt werden. Das Kleben oder Befestigen mittels Klettbändern der Verkabelung an ein Gewirk oder Geflecht oder insbesondere an eine Filzmatte ist leicht und schnell durchführbar, so dass diese Befestigung der Verkabelung sehr kostengünstig ist.

In einer bevorzugten Ausführungsform sind mehrere Lagen der Verkabelung übereinander angeordnet. In einer möglichen Ausführungsform ist für jede Lage der Verkabelung eine Schicht der Auflage vorgesehen, an der die Verkabelung befestigt ist. Dadurch kann auch räumlich eine modulare Trennung der Funktionen erreicht werden, für die die Verkabelung eingesetzt wird. In einer weiteren Ausführungsform sind mehrere Lagen der Verkabelung an einer Schicht der Auflage befestigt, so dass der Platzbedarf geringer ist.

Durch das Anordnen mehrerer Lagen der Verkabelung übereinander kann mit gleichen oder ähnlichen Lagen der Verkabelung eine große Anzahl von Varianten der Gesamtverkabelung erreicht werden. Die Stückzahlen für die Herstellung der Lagen der Verkabelung sind daher höher, und die Verkabelung kann kostengünstiger gefertigt werden. Durch die geringe Teilezahl ist die Lagerverwaltung kostengünstig.

Auch bei Anordnung mehrerer Lagen der Verkabelung übereinander ist durch die vergleichsweise geringe Dicke der benötigte Bauraum im Sitz gering, und der Sitzkomfort wird nicht negativ beeinflusst.

In einer bevorzugten Ausführungsform des Sitzes sind Schaltungskomponenten Bestandteile der Verkabelung.

Schaltungskomponenten im Sinne der Erfindung sind Stecker, Sensoren, passive Bauelemente, aktive Bauelemente, integrierte Schaltungen und/oder komplexe Schaltungen, die insbesondere in die Verkabelung (bei ihrer Herstellung) integriert sind/werden. Der Fachmann erkennt, dass Schaltungskomponenten auch elektrische Bauelemente umfassen können. Die Schaltungskomponenten können insbesondere bei der Ausbildung der Verkabelung als FPC-Material teilweise lediglich durch die Veränderung der Leitermaterialien oder -querschnitte - beispielsweise wenn ein Widerstand benötigt wird - oder durch eine spezielle Anordnung der Leiterbeispielsweise wenn eine Spule benötigt wird - in die Verkabelung eingebracht sein. Dadurch verringert sich die Teilezahl in der Fertigung der Sitze erheblich, die Montage wird erheblich vereinfacht, und die Kosten werden deutlich verringert. Aufgrund der fehlenden Zwischenkontakte ist die Fehlerhäufigkeit, beispielsweise durch Wackelkontakte, insbesondere durch dauerhafte ruckartige Belastung im Betrieb des Fahrzeugs, geringer. Das Einsparen von Zwischenkontakten ist kostengünstig, da nicht nur die Bauteile sondern auch der Anpassungs- und Montageaufwand entfällt.

Die Verkabelung oder Teile der Verkabelung können als Busleitungen zur Datenübertragung und/oder als Antenne verwendet werden.

Bevorzugt ist die Verkabelung mit Anschlusskomponenten durch Vorkonfektionierung, Löten, Stecken und/oder Klemmen verbunden.

Anschlusskomponenten, die im Bereich der Auflage angeordnet sind, sind beispielsweise Lüftermotoren oder Sensormatten. Diese werden bevorzugt bereits bei der Herstellung der Verkabelung mit dieser verbunden (Vorkonfektionierung). Stützstrukturkomponenten sind solche, die an oder in unmittelbarer Nähe der Stützstruktur plaziert sind, beispielsweise Motoren und/oder Steuergeräte. Stützstrukturkomponenten werden erfindungsgemäß insbesondere mittels Löten, Stecken und/oder Klemmen mit der Verkabelung und/oder mit Anschlusskomponenten verbunden.

Der Fachmann erkennt, dass jede Verbindungsform zum Verbinden elektrischer Leiter geeignet ist, die eine ausreichende Verbindungssicherheit bietet und wenig Platz bedarf.

Bevorzugt werden Anschlusskomponenten während und/oder unmittelbar nach dem Befestigen der Verkabelung an eine Schicht der Auflage angeschlossen. Eine Baugruppe, die nur aus einer Schicht der Auflage und der Verkabelung besteht, ist überschaubarer, als eine Baugruppe, die aus mehreren Schichten der Auflage sowie der Verkabelung besteht, oder bei der bereits Teile der Auflage auf den Sitz aufgebracht sind. Aufgrund der besseren Überschaubarkeit ist das Anschließen von Anschlusskomponenten während und/oder unmittelbar nach dem Befestigen der Verkabelung an eine Schicht der Auflage einfacher und schneller durchführbar, wobei gleichzeitig die Häufigkeit von Fehlanschlüssen reduziert ist. Außerdem können Monteure das Anschließen in diesem Fertigungsschritt zumindest teilweise mit aufrechter Haltung oder sitzend vornehmen, da das Volumen einer einzelnen Schicht der Auflage im Vergleich zu einer mehrschichtigen Baugruppe oder dem Sitz klein und weniger sperrig ist. Außerdem können kleinere Schichten auf einen Tisch aufgelegt werden. Der Anschluss muss auch nicht in schwer zugänglichen Bereichen durchgeführt werden, oder sogar in Bereichen, in denen eine Verletzungsgefahr für die Monteure, insbesondere an den Händen, besteht. Die Handhabung ist dadurch für die Monteure insgesamt vereinfacht.

Vorzugsweise ist die Verkabelung mit Stützstrukturkomponenten mittels Ausbindungen und/oder kurzen Abzweigungen verbunden. Hierunter ist insbesondere zu verstehen, dass die Verkabelung ggf. nicht in allen ihren Teilbereichen fest mit der Auflage verbunden ist, sondern insbesondere an ihren Anschlussenden zumindest teilweise flexibel ist, so dass ein solcher Teilbereich der Verkabelung zur Verbindung mit den Stützstrukturkomponenten zu diesen hingeführt werden kann. Hierbei werden solche Anschlussenden insbesondere aus der Ebene der Verkabelung hinausbewegt, so dass die Verkabelung insgesamt eine dreidimensionale Struktur annimmt. Falls die Verkabelung an der Auflage mittels Klettverschlüssen angebracht ist, wird eine "Ausbindung" bzw. "kurze Abzweigung" beispielsweise durch eines der Enden der Verkabelung bis zum letzten (vorhergehenden) Klettpunkt gebildet.

Die Stützstruktur umfasst alle strukturgebenden Komponenten des Sitzes. In ihrer Nähe können sich Stützstrukturkomponenten wie beispielsweise Motoren oder Steuergeräte befinden. Die Ausbindungen und/oder kurzen Abzweigungen sind erfindungsgemäß Teile der Verkabelung und mit dieser fest verbunden.

Dadurch ist die Abhängigkeit der Verkabelung von der Stützstruktur minimal und die Verkabelung und die Stützstruktur können weitestgehend unabhängig voneinander entwickelt werden. Die Konstruktion der Verkabelung und ihre Montage ist daher einfach.

Vorzugsweise ist die Verkabelung im wesentlichen so biegsam wie oder biegsamer als die Auflage, insbesondere in deren eingebautem Zustand. Hierdurch wird bewirkt, dass die Verkabelung nicht einer größeren Alterung durch die am bzw. auf dem Sitz hervorgerufenen Bewegungen unterworfen ist als die Auflage. Dadurch ist weiterhin zum einen das Verlegen der Verkabelung einfach und es ist weiterhin möglich, die Verkabelung an der Auflage zu befestigen.

Die Verkabelung ist nämlich erheblichen Kräften ausgesetzt, beispielsweise einer Flächenbelastung durch das Gewicht der Insassen oder Punktbelastungen beim Ablegen von kantigen Gegenständen auf dem Sitz. Durch ihre Biegsamkeit passt sich die Verkabelung der Sitzform und den Belastungen an und ist strapazierbar.

Fahrzeugsitze werden häufig bewegt, beispielsweise beim Verstellen der Lehne des Sitzes, der Sitzhöhe oder des Abstands zum Cockpit. Dadurch können sich Abstände der Verkabelung zu Komponenten des Sitzes, beispielsweise Motoren oder Steuergeräte, immer wieder ändern. Durch die Biegsamkeit der Verkabelung wird einem schädigenden Einfluss solcher Bewegungen vorgebeugt. Während der Konstruktion ist die Anpassung der Verkabelung an unterschiedliche Geometrien von verschiedenen Sitzen aufgrund ihrer Biegsamkeit leichter.

Die Aufgabe wird weiterhin gelöst durch Verfahren zur Montage eines Sitzes, insbesondere für ein Fahrzeug, wobei der Sitz eine Stützstruktur, eine Auflage und eine Verkabelung, ausgenommen Sitzheizungen, aufweist, wobei das Verfahren folgende Schritte umfasst:
a) Befestigen der Verkabelung an einer Schicht der Auflage,
b) Aufbringen von Schichten der Auflage auf den Sitz,
c) Zusammenfügen der Auflage,
wobei Schritt c) entweder vor Schritt b) oder nach Schritt b) erfolgt. Dadurch erfolgt das Befestigen der Verkabelung unabhängig vom Aufbringen auf den Sitz.

Die Verkabelung des Sitzes wird daher weitestgehend von seiner Stützstruktur unabhängig.

Der Aufwand zur Befestigung der Verkabelung an der Stützstruktur des Fahrzeugs mittels Befestigungselementen entfällt. Die Stabilität der Stützstruktur bleibt erhalten, die Befestigungselemente werden nicht benötigt, und der Arbeitsaufwand ist deutlich geringer.

Außerdem ist die Verbindung der Anschlusskomponenten und/oder der Stützstrukturkomponenten mit der Verkabelung einfach.

Die Aufgabe wird weiterhin gelöst durch die Verwendung eines Flachleiters zur Bildung einer Verkabelung, ausgenommen Sitzheizungen, eines eine Auflage aufweisenden Sitzes, insbesondere für ein Fahrzeug, wobei die Verkabelung in der Auflage und/oder an der Auflage befestigt ist.

Durch die Verwendung der Flachleiter ist der Bauraum, der für die Verkabelung des Sitzes benötigt wird, gering. Das Gewicht der Verkabelung ist im Vergleich zur Verkabelung durch Rundleiter ggf. geringer. Die Verkabelung ist schnell und einfach in und/oder an der Auflage befestigbar, und daher ist die Montage des Sitzes einfach und kostengünstig. Durch Vorkonfektionieren der Verkabelung und ggf. Anschlusskomponenten als Baugruppe ist der Aufwand für die Lagerung, Fertigung und Montage reduziert und kostengünstig.

Die beschriebene Verkabelung für einen Sitz, insbesondere für ein Fahrzeug ist strapazierbar, einfach montierbar, kostengünstig und platzsparend. Ihr Gewicht ist minimiert, und sie beeinflusst den Sitzkomfort nicht negativ. Außerdem ist bei Verwendung der erfindungsgemäßen Verkabelung der benötigte Bauraum gering.

Die Erfindung wird nachfolgend anhand von Ausführungsbeispielen unter Bezugnahme auf die Zeichnungen erläutert. Es zeigen
- **Figur 1**: zeigt schematisch eine mögliche Anordnung der Verkabelung der Lehne eines Sitzes für ein Fahrzeug.
- **Figur 2**: zeigt schematisch eine mögliche Anordnung der Verkabelung der Lehne eines Sitzes für ein Fahrzeug nach dem Polstern auf die Stützstruktur.
- **Figur 3**: zeigt schematisch eine mögliche Ausführungsform eines Sitzes für ein Fahrzeug.
- **Figur 4**: zeigt schematisch eine weitere mögliche Anordnung der Verkabelung der Lehne eines Sitzes für ein Fahrzeug nach dem Polstern auf die Stützstruktur.

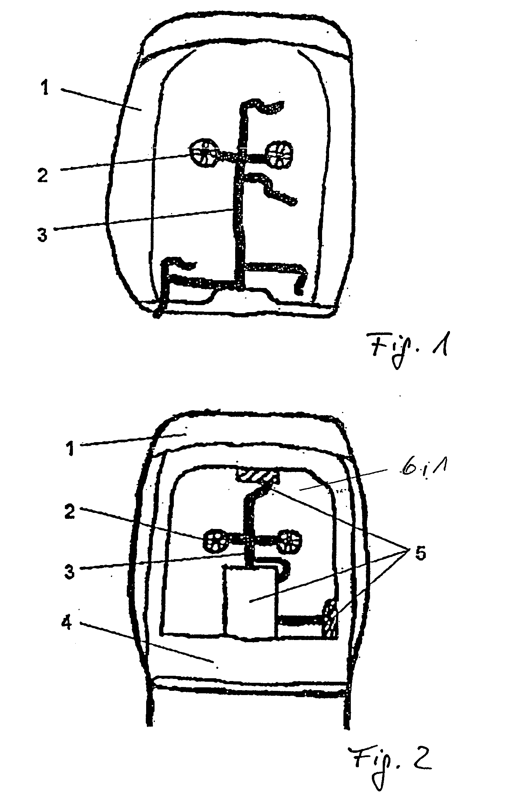

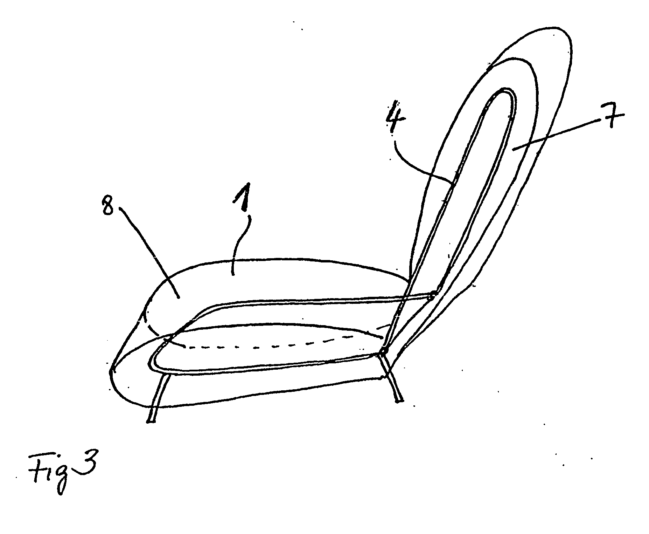

In **Figur 1** ist schematisch eine mögliche Anordnung der Verkabelung 3 der Lehne eines Sitzes für ein Fahrzeug dargestellt. Die Verkabelung 3 ist in und/oder an der Auflage 1 befestigt und umfasst erfindungsgemäß insbesondere Flachleiter. Sie ist mit Anschlusskomponenten 2, wie beispielsweise Sitzheizungselemente oder Lüfterelemente, verbunden, die im Sitz eingebaut sind, und zwar im wesentlichen im Bereich der Auflage 1. Hierbei kann ein Sitzheizungselement insbesondere auch in eine Dekorschicht- beispielsweise Stoff od er Leder-eingebaut sein. Die Auflage 1 umfasst sowohl die Auflage eines nicht gesondert mittels eines Bezugszeichens bezeichneten Lehnenteils 7 als auch die Auflage 1 eines nicht gesondert mittels eines Bezugszeichens bezeichneten Sitzes. Sowohl das Lehnenteil 7 als auch das Sitzteil 8 des Sitzes, die in **Figur 3** dargestellt sind, weisen eine - insbesondere metallisch vorgesehene - Stützstruktur 4 auf, die insgesamt als die Stützstruktur 4 des Sitzes bezeichnet wird. Die Stützstruktur 4 kann erfindungsgemäß selbstverständlich auch aus Kunststoff oder einem anderen geeigneten Material sein. Weiterhin weisen sowohl das Lehnenteil 7 als auch das Sitzteil 8 mit ihren jeweiligen Anteilen der Stützstruktur 4 im wesentlichen weitgehend ebene Flächen auf, die als Hauptbenutzungsflächen mit einem Insassen bzw. einem Benutzer des Sitzes in Kontakt stehen, wobei sich jedoch zwischen diesen Flächen der Stützstruktur 4 und dem Benutzer die Auflage 1 befindet. Die Verkabelung 3 ist nun zwischen der Stützstruktur 4 und der Auflage 1 bzw. in die Auflage 1 integriert zumindest in der Nähe der Verbindungsfläche zwischen der Stützstruktur 4 und der (Rückseite der) Auflage 1 vorgesehen. Erfindungsgemäß ist diese Verbindungsfläche weitgehend eben vorgesehen, zumindest im Vergleich zur Biegsamkeit der Auflage 1 bzw. der Verkabelung 3.

In **Figur 2** ist schematisch eine mögliche Anordnung der Verkabelung 3 der Lehne eines Sitzes für ein Fahrzeug dargestellt. Es sind Anschlusskomponenten 2 dargestellt, die an oder im Bereich der Auflage 1 angeordnet sind. Außerdem sind Teile der Stützstruktur 4 dargestellt, an denen oder in deren unmittelbarer Nähe sich Stützstrukturkomponenten 5 befinden, beispielsweise Motoren oder Steuergeräte. Die Stützstrukturkomponenten 5 werden während der Montage mittels nicht eigens mit einem Bezugszeichen bezeichneten Ausbindungen und/oder kurzen Abzweigungen mit der Verkabelung 3 verbunden.

Die Auflage 1, die die Verkabelung 3 aufweist, ist aus einem sich im wesentlichen flächig erstreckenden Material gefertigt, beispielsweise eine Vlies- oder Filzmatte 6, und bildet in einer möglichen Ausführungsform eine Schicht der Auflage 1-wenn die dargestellte Stützstruktur 4 rahmenförmig ist - oder in einer ebenfalls möglichen Ausführungsform eine weitere Auflage 1 des Sitzes - wenn die dargestellte Stützstruktur 4 sich zumindest teilweise flächig über die Lehne 7 erstreckt.

Die Erfindung ist in Sitzen vielerlei Fahrzeugtypen, beispielsweise Autos, Schiffen oder Flugzeugen verwendbar.

In **Figur 3** ist eine mögliche Ausführungsform eines Sitzes für ein Fahrzeug dargestellt. Der Sitz umfasst eine Auflage 1 sowie eine Stützstruktur 4. Die Stützstruktur 4 umfasst alle strukturgebenden Komponenten des Sitzes und die Auflage 6 umfasst zumindest alle komfortbietenden Komponenten des Sitzes. Die strukturbildenden Komponenten 4 sind rahmenförmig vorgesehen. Der Sitz weist eine im wesentlichen vertikal angeordnete Lehne 7 und ein im wesentlichen horizontal angeordnetes Sitzteil 8 auf.

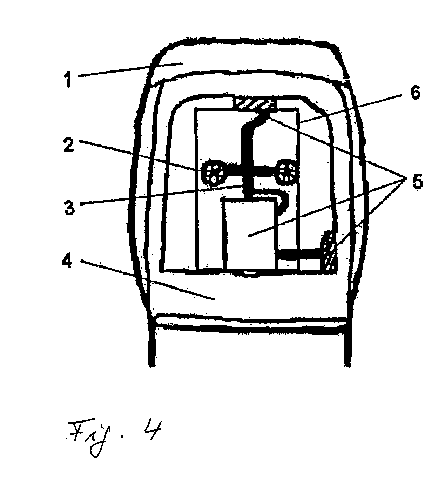

**Figur 4** zeigt schematisch eine weitere mögliche Anordnung der Verkabelung 3 der Lehne 7 eines Sitzes für ein Fahrzeug nach dem Polstern auf die Stützstruktur 4. Die Auflage 1 umfasst eine Filzmatte 6, an der die Verkabelung 3 befestigt ist. Die Anschlusskomponenten 2 sind an der Filzmatte angeordnet. Das Verbinden der Anschlusskomponenten 2 mit der Verkabelung 3 erfolgt während und/oder unmittelbar nach dem Befestigen der Verkabelung 3 an der Filzmatte 6 und unabhängig vom Zusammenfügen der Auflage 1. Die Stützstrukturkomponenten 5 sind mittels Ausbindungen und/oder kurzen Abzweigungen mit der Verkabelung 3 verbunden.

Die Verkabelung eines Sitzes im Sitzteil 8 erfolgt in einer besonders bevorzugten Ausführungsform mittels einer Auflage 1 in Form einer Filz- oder Vliesmatte 6, die unterhalb einer Kissenschale, die eine sich im wesentlichen flächig erstreckende Stützstruktur 4 des Sitzes ist, angeordnet ist. In dieser Ausführungsform können die Auflage 1 mit der Verkabelung 3 und im wesentlichen die komfortbietenden Komponenten mit zumindest Teilen der Stützstruktur 4 getrennt voneinander vorgefertigt werden, so dass die Montage des Sitzes durch Anordnen der vorgefertigten Auflage 1 an die Stützstruktur 4 sehr schnell und daher kostengünstig erfolgen kann.

### Bezugszeichenliste:

- 1: Auflage
- 2: Anschlu sskomponenten
- 3: Verkabelung
- 4: Stützstruktur
- 5: Stützstrukturkomponenten
- 6: Filzmatte
- 7: Lehne
- 8: Sitzteil

## Patentansprüche

1. Sitz, insbesondere für ein Fahrzeug, wobei der Sitz eine Stützstruktur (4), eine Auflage (1) und eine Verkabelung (3), ausgenommen Sitzheizungen, aufweist, **dadurch gekennzeichnet, dass** die Verkabelung (3) an der Auflage (1) befestigt ist.

2. Sitz nach Anspruch 1, **dadurch gekennzeichnet, dass** die Auflage (1) zumindest teilweise mehrschichtig ist, wobei die Verkabelung (3) bevorzugt an einer der Schichten befestigt ist.

3. Sitz nach einem der vorhergehenden Ansprüche, **dadurch gekennzeichnet, dass** die Schichten aus verschiedenem Material gebildet sind.

4. Sitz nach einem der vorhergehenden Ansprüche, **dadurch gekennzeichnet, dass** er mehrere Auflagen (1) aufweist, und dass die Verkabelung (3) an zumindest einer der Auflagen (1) befestigt ist.

5. Sitz nach einem der vorhergehenden Ansprüche, **dadurch gekennzeichnet, dass** die Verkabelung (3) an einer Filzmatte (6) befestigt ist.

6. Sitz nach einem der vorhergehenden Ansprüche, **dadurch gekennzeichnet, dass** die Filzmatte (6) eine der mehreren Auflagen (1) bildet.

7. Sitz nach einem der vorhergehenden Ansprüche, **dadurch gekennzeichnet, dass** die Verkabelung (3) Flachleiter umfasst.

8. Sitz nach einem der vorhergehenden Ansprüche, **dadurch gekennzeichnet, dass** die Verkabelung (3) in der Auflage (1) angebracht ist.

9. Sitz nach einem der vorhergehenden Ansprüche, **dadurch gekennzeichnet, dass** die Auflage (1) eine Sichtseite und eine Rückseite aufweist und dass die Verkabelung (3) an der Rückseite der Auflage (3) vorgesehen ist.

10. Sitz nach einem der vorhergehenden Ansprüche, **dadurch gekennzeichnet, dass** die Filzmatte (6) die Rückseite der Auflage (3) bildet.

11. Sitz nach einem der vorhergehenden Ansprüche, **dadurch gekennzeichnet, dass** die Befestigung der Verkabelung (3) durch Kleben und/oder mittels Klettbändern und/oder weiteren Mitteln zur Befestigung erfolgt.

12. Sitz nach einem der vorhergehenden Ansprüche, **dadurch gekennzeichnet, dass** mehrere Lagen der Verkabelung (3) übereinander angeordnet sind.

13. Sitz nach einem der vorhergehenden Ansprüche, **dadurch gekennzeichnet, dass** Schaltungskomponenten Bestandteile der Verkabelung(3) sind.

14. Sitz nach einem der vorhergehenden Ansprüche, **dadurch gekennzeichnet, dass** die Verkabelung (3) mit Anschlusskomponenten (2) und/oder Stützstrukturkomponenten (5), durch Vorkonfektionieren, Löten, Stecken und/oder Klemmen verbunden ist.

15. Sitz nach Anspruch 14, **dadurch gekennzeichnet, dass** die Verkabelung (3) mit Stützstrukturkomponenten (5), die an oder in unmittelbarer Nähe der Stützstruktur (4) platziert sind, mittels Ausbindungen und/oder kurzen Abzweigungen verbunden ist.

16. Sitz nach einem der vorhergehenden Ansprüche, **dadurch gekennzeichnet, dass** die Verkabelung (3) im wesentlichen so biegsam ist wie die Auflage (1) oder biegsamer ist als die Auflage (1).

17. Verfahren zur Montage eines Sitzes, insbesondere für ein Fahrzeug, wobei der Sitz eine Stützstruktur (4), eine Auflage (1) und eine Verkabelung (3), ausgenommen Sitzheizungen, aufweist, **dadurch gekennzeichnet, dass** das Verfahren folgende Schritte umfasst:
a) Befestigen der Verkabelung (3) an einer Schicht der Auflage (1),
b) Aufbringen von Schichten der Auflage (1) auf den Sitz,
c) Zusammenfügen der Auflage (1),
wobei Schritt c) entweder vor Schritt b) oder nach Schritt b) erfolgt.

18. Verwendung eines Flachleiters zur Bildung einer Verkabelung (3), ausgenommen Sitzheizungen, eines eine Auflage aufweisenden Sitzes, insbesondere für ein Fahrzeug, **dadurch gekennzeichnet, dass** die Verkabelung (3) in der Auflage (1) und/oder an der Auflage (1) befestigt ist.

## Claims

1. Seat, in particular for a vehicle, the seat having a supporting structure (4), a support (1) and wiring (3), apart from seat heating systems, **characterized in that** the wiring (3) is fixed to the support (1).

2. Seat according to Claim 1, **characterized in that** the support (1) is at least partially multilayered, with the wiring (3) preferably being fixed to one of the layers.

3. Seat according to one of the preceding claims, **characterized in that** the layers are formed from different material.

4. Seat according to one of the preceding claims, **characterized in that** it has a plurality of supports (1), and **in that** the wiring (3) is fixed to at least one of the supports (1).

5. Seat according to one of the preceding claims, **characterized in that** the wiring (3) is fixed to a felt mat (6).

6. Seat according to one of the preceding claims, **characterized in that** the felt mat (6) forms one of the plurality of supports (1).

7. Seat according to one of the preceding claims, **characterized in that** the wiring (3) comprises flat conductors.

8. Seat according to one of the preceding claims, **characterized in that** the wiring (3) is fitted in the support (1).

9. Seat according to one of the preceding claims, **characterized in that** the support (1) has a visible side and a rear side, and **in that** the wiring (3) is provided on the rear side of the support (1).

10. Seat according to one of the preceding claims, **characterized in that** the felt mat (6) forms the rear side of the support (1).

11. Seat according to one of the preceding claims, **characterized in that** the fixing of the wiring (3) takes place by adhesive bonding and/or by means of touch-and-close strips and/or by means of further fixing means.

12. Seat according to one of the preceding claims, **characterized in that** a plurality of layers of the wiring (3) are arranged one above another.

13. Seat according to one of the preceding claims, **characterized in that** circuit components are parts of the wiring (3).

14. Seat according to one of the preceding claims, **characterized in that** the wiring (3) is connected to connecting components (2) and/or supporting structure components (5) by manufacturing in advance, soldering, plugging in and/or clamping.

15. Seat according to Claim 14, **characterized in that** the wiring (3) is connected to supporting structure components (5), which are placed on or in the immediate vicinity of the supporting structure (4), by means of interlacing connections and/or short branch connections.

16. Seat according to one of the preceding claims, **characterized in that** the wiring (3) is essentially as flexible as the support (1) or is more flexible than the support (1).

17. Method for assembling a seat, in particular for a vehicle, the seat having a supporting structure (4), a support (1) and wiring (3), apart from seat heating systems, **characterized in that** the method comprises the following steps:
a) fixing the wiring (3) to a layer of the support (1),
b) fitting layers of the support (1) onto the seat,
c) joining together the support (1),
with step c) taking place either before step b) or after step b).

18. Use of a flat conductor for the wiring (3), apart from seat heating systems, of a seat having a support, in particular for a vehicle, **characterized in that** the wiring (3) is fixed in the support (1) and/or to the support (1).

## Revendications

1. Siège, en particulier pour un véhicule, le siège présentant une structure de support (4), un appui (1) et un câblage (3), à l'exception des dispositifs de chauffage de siège, **caractérisé en ce que** le câblage (3) est fixé sur l'appui (1).

2. Siège selon la revendication 1, **caractérisé en ce que** l'appui (1) est au moins en partie multicouche, le câblage (3) étant de préférence fixé sur l'une des couches.

3. Siège selon l'une quelconque des revendications précédentes, **caractérisé en ce que** les couches sont formées d'un matériau différent.

4. Siège selon l'une quelconque des revendications précédentes, **caractérisé en ce qu'**il présente plusieurs appuis (1) et **en ce que** le câblage (3) est fixé sur au moins l'un des appuis (1).

5. Siège selon l'une quelconque des revendications précédentes, **caractérisé en ce que** le câblage (3) est fixé sur un mat de feutre (6).

6. Siège selon l'une quelconque des revendications précédentes, **caractérisé en ce que** le mat de feutre (6) forme l'un des différents appuis (1).

7. Siège selon l'une quelconque des revendications précédentes, **caractérisé en ce que** le câblage (3) comprend des câbles plats.

8. Siège selon l'une quelconque des revendications précédentes, **caractérisé en ce que** le câblage (3) est monté dans l'appui (1).

9. Siège selon l'une quelconque des revendications précédentes, **caractérisé en ce que** l'appui (1) présente un côté visible et un côté arrière, et **en ce que** le câblage (3) est prévu sur le côté arrière de l'appui (1).

10. Siège selon l'une quelconque des revendications précédentes, **caractérisé en ce que** le mat de feutre (6) forme le côté arrière de l'appui (1).

11. Siège selon l'une quelconque des revendications précédentes, **caractérisé en ce que** la fixation du câblage (3) s'effectue par collage et/ou au moyen de bandes velcro et/ou par d'autres moyens de fixation.

12. Siège selon l'une quelconque des revendications précédentes, **caractérisé en ce que** plusieurs couches du câblage (3) sont disposées les unes sur les autres.

13. Siège selon l'une quelconque des revendications précédentes, **caractérisé en ce que** des composants de circuit font partie du câblage (3).

14. Siège selon l'une quelconque des revendications précédentes, **caractérisé en ce que** le câblage (3) est connecté à des composants de raccordement (2) et/ou des composants de la structure de support (5), par préassemblage, brasage, enfichage et/ou serrage.

15. Siège selon la revendication 14, **caractérisé en ce que** le câblage (3) est connecté à des composants de la structure de support (5) qui sont placés contre la structure de support (4) ou à proximité immédiate de celle-ci, au moyen de liaisons et/ou de courts branchements.

16. Siège selon l'une quelconque des revendications précédentes, **caractérisé en ce que** le câblage (3) est essentiellement aussi flexible que l'appui (1) ou est plus flexible que l'appui (1).

17. Procédé de montage d'un siège, notamment pour un véhicule, dans lequel le siège présente une structure de support (4), un appui (1), et un câblage (3), à l'exception des dispositifs de chauffage, **caractérisé en ce que** le procédé comprend les étapes suivantes :
a) fixation du câblage (3) à une couche de l'appui (1),
b) montage de couches de l'appui (1) sur le siège,
c) assemblage de l'appui (1),
l'étape c) s'effectuant soit avant l'étape b), soit après l'étape b).

18. Utilisation d'un câble plat pour la formation d'un câblage (3), à l'exception des dispositifs de chauffage, d'un siège présentant un appui, notamment pour un véhicule, **caractérisée en ce que** le câblage (3) est fixé dans l'appui (1) et/ou sur l'appui (1).
